Europäisches Patentamt

**European Patent Office**

**Office européen des brevets**

(11) Numéro de publication : **0 027 765**
**B1**

# FASCICULE DE BREVET EUROPÉEN

(45) Date de publication du fascicule du brevet :
03.08.83

(51) Int. Cl.³ : **F 16 K 27/10, F 16 K 5/06**

(21) Numéro de dépôt : **80401479.3**

(22) Date de dépôt : **17.10.80**

(54) **Robinet à boule et ses procédés de fabrication.**

(30) Priorité : 23.10.79 FR 7926226

(43) Date de publication de la demande :
29.04.81 Bulletin 81/17

(45) Mention de la délivrance du brevet :
03.08.83 Bulletin 83/31

(84) Etats contractants désignés :
**AT BE CH DE GB IT LI NL**

(56) Documents cités :
**DE A 2 427 783**
**FR A 1 334 748**
**FR A 1 543 939**
**FR A 1 590 830**
**FR A 2 257 831**
**US A 3 743 242**

(73) Titulaire : **Gachot, Jean**
**26 bis, avenue de Paris**
**F-95230 Soisy sous Montmorency (FR)**

(72) Inventeur : **Gachot, Jean**
**26 bis, avenue de Paris**
**F-95230 Soisy sous Montmorency (FR)**

(74) Mandataire : **Bouju, André**
**38 Avenue de la Grande Armée**
**F-75017 Paris (FR)**

Robinet à boule et ses procédés de fabrication

La présente invention concerne un robinet à boule comprenant un corps tubulaire ayant des extrémités annulaires, deux flasques présentant chacun une ouverture centrale entourée par une gorge annulaire, des moyens pour solliciter les flasques l'un vers l'autre tandis que les extrémités annulaires du corps sont engagées chacune dans la gorge de l'un des flasques, un obturateur sphérique traversé par un passage, un arbre de commande monté en rotation dans un alésage du corps et lié en rotation à l'obturateur sphérique, et deux sièges annulaires montés de chaque côté de l'obturateur sphérique.

Un tel robinet est connu d'après le FR-A-2 257 831. Selon ce document, les sièges, qui sont d'ailleurs d'un type spécial, sont positionnés par coopération du corps et des flasques, l'emboîtement du corps et des flasques étant agencé de façon qu'une partie des sièges y soit en même temps retenue prisonnière.

On comprend que dans ces conditions, le corps nécessite une épaisseur et une précision de montage qui nécessitent en pratique le recours aux techniques coûteuses que sont le moulage et l'usinage. De plus, le montage nécessite certaines précautions car le siège doit être correctement positionné avant montage, puis serré de façon bien dosée.

D'autre part, le DE-A-24 27 783 décrit une construction selon laquelle le corps est soudé aux brides tandis que celles-ci portent seules les sièges. Cette vanne a des inconvénients liés à sa construction économique. Le soudage ne peut assurer un positionnement précis des flasques relativement au corps. Si le positionnement est incorrect, cela est irrémédiable. Comme les sièges doivent être mis en place avant soudage, ils doivent supporter l'échauffement du soudage, ce qui exclut les matières souples et rend donc d'autant plus désastreux tout positionnement incorrect. Enfin, la construction n'étant pas démontable, les sièges ne peuvent être remplacés s'ils sont usés.

Le but de l'invention est de remédier à ces inconvénients en proposant une vanne particulièrement économique offrant malgré cela une bonne précision et la possibilité de changer les sièges lorsqu'ils sont usés.

Ce but est atteint en employant les moyens énoncés dans la partie caractérisante de la revendication 1.

Ainsi, le corps tubulaire n'a plus qu'une fonction de rétention du fluide et il peut donc être fabriqué de façon très simplifiée, par exemple par extrusion ou par roulage et soudage axial d'une découpe en tôle.

Malgré cela, la construction emboîtée confère à la vanne une bonne précision d'ensemble et garantit par conséquent une bonne étanchéité. Les sièges peuvent être en matière souple tels que le polytétrafluoréthylène, et il est possible d'en permettre le remplacement lorsqu'ils sont usés.

Suivant un autre aspect de l'invention, le procédé de fabrication du robinet ci-dessus est caractérisé en ce qu'on emboîte l'un contre l'autre une membrane et un embout tubulaire de raccordement dans l'ouverture centrale de chaque flasque, et en ce qu'on réalise par bombardement électronique un cordon de soudure cylindrique sur le pourtour de cette ouverture pour fixer simultanément l'embout et la membrane au flasque.

Ainsi, le montage des pièces avant soudage est aisé, et la soudure, réalisée dans la masse et sans oxydation par bombardement électronique, est particulièrement résistante, d'autant plus qu'il y a emboîtement préalable des pièces.

Suivant un autre aspect de l'invention, le procédé de fabrication d'un robinet à boule dans lequel chaque siège est monté dans un évidement annulaire ménagé autour de l'ouverture centrale de chaque flasque est caractérisé en ce qu'on emmanche un embout tubulaire de raccordement dans chacun des flasques, en ce qu'on soude cet embout au flasque par bombardement électronique, et en ce qu'autour de l'ouverture centrale du flasque on usine pour le siège un évidement annulaire séparé du passage réservé à l'écoulement par l'extrémité annulaire de l'embout.

Ce procédé conduit à usiner l'évidement annulaire dans ou à proximité immédiate de la soudure de l'embout, ce qui est rendu possible par l'emploi de la soudure par bombardement électronique qui lie intimement les pièces soudées. Ainsi, le siège est très près du pourtour de l'ouverture du flasque sans toutefois créer de protubérance qui gêne l'écoulement en position d'ouverture du robinet.

D'autres particularités et avantages de la présente invention ressortiront encore de la description ci-après.

Aux dessins annexés, donnés à titre d'exemples non limitatifs :

la Figure 1 est une vue, en coupe selon l'axe d'écoulement, du robinet conforme à l'invention ;

la Figure 2 est une vue de face, en coupe partielle selon II-II de la Figure 1 ;

la Figure 3 est une vue partielle du robinet de la Figure 1, à échelle agrandie ;

la Figure 4 est une vue en perspective du tronçon tubulaire du corps ;

les Figures 5 à 7 et 10 sont des vues partielles, en coupe selon l'axe d'écoulement du robinet, de différents modes de réalisation du robinet conforme à l'invention ; et

les Figures 8 et 9 sont des vues partielles en coupe illustrant le procédé de fabrication du robinet de la Figure 10.

L'invention sera plus particulièrement, mais non limitativement, décrite dans son application à un robinet à boule.

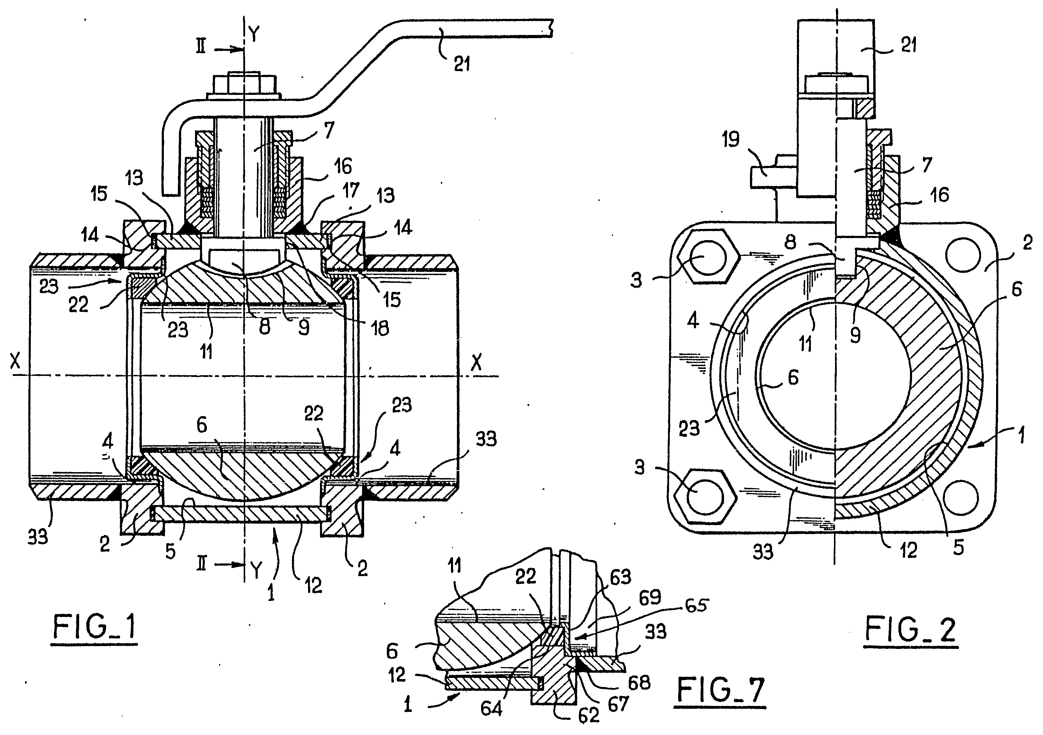

Comme le montrent les Figures 1 à 4, le robinet comprend un corps 1 serré entre deux flasques sensiblement carrés 2 au moyen de quatre tirants 3 montés aux quatre coins des flasques 2.

Ceux-ci présentent chacun une ouverture centrale 4 d'axe XX pour le passage du fluide dont l'écoulement est à contrôler.

Le corps 1 est traversé par un passage cylindrique 5, d'axe XX (Figure 1), de diamètre sensiblement supérieur à celui des ouvertures 4. Dans ce passage 5 est montée une boule 6 liée en rotation à un arbre de commande 7 d'axe YY transversal à l'axe XX. L'extrémité 8 de l'arbre 7 dirigée vers la boule 6 est aplatie et engagée dans une fente 9 de la boule 6 pour assurer cette liaison en rotation.

La boule 6 est traversée par un conduit cylindrique 11 coaxial à XX en position d'ouverture du robinet, et orthogonal aux axes XX et YY en position de fermeture.

Conformément à l'invention, le corps 1 comprend un tronçon tubulaire 12 dont les deux extrémités annulaires 13 sont emboîtées chacune dans une gorge annulaire 14, de section rectangulaire, ménagée sur la face des flasques 2 tournée vers la boule 6, autour de l'ouverture centrale 4.

Un joint d'étanchéité annulaire 15, par exemple en polytétrafluoréthylène ou autre résine polyfluorée, est confiné entre l'extrémité 13 du tronçon tubulaire 12, le fond et les deux faces latérales de la gorge 14.

L'épaisseur de la paroi du tronçon 12 est d'environ 10 à 15 % du rayon du passage 5 dans l'exemple représenté, mais pourrait être différente, en fonction de la pression nominale d'écoulement notamment.

Cette épaisseur peut évidemment être augmentée bien au-delà des valeurs ci-dessus si l'on ne craint pas d'accroître le poids et le prix de revient du robinet.

Un presse-étoupe 16, traversé par l'arbre 7 est fixé au tronçon 12 au moyen d'un cordon de soudure annulaire 17 qui entoure un perçage 18 ménagé dans le tronçon 12 pour le passage de l'arbre 6. Le boîtier du presse-étoupe 16 porte deux butées 19 qui limitent le débattement, entre deux positions extrêmes, d'une poignée de commande 21 liée en rotation à l'arbre 7 à l'opposé de la boule 6.

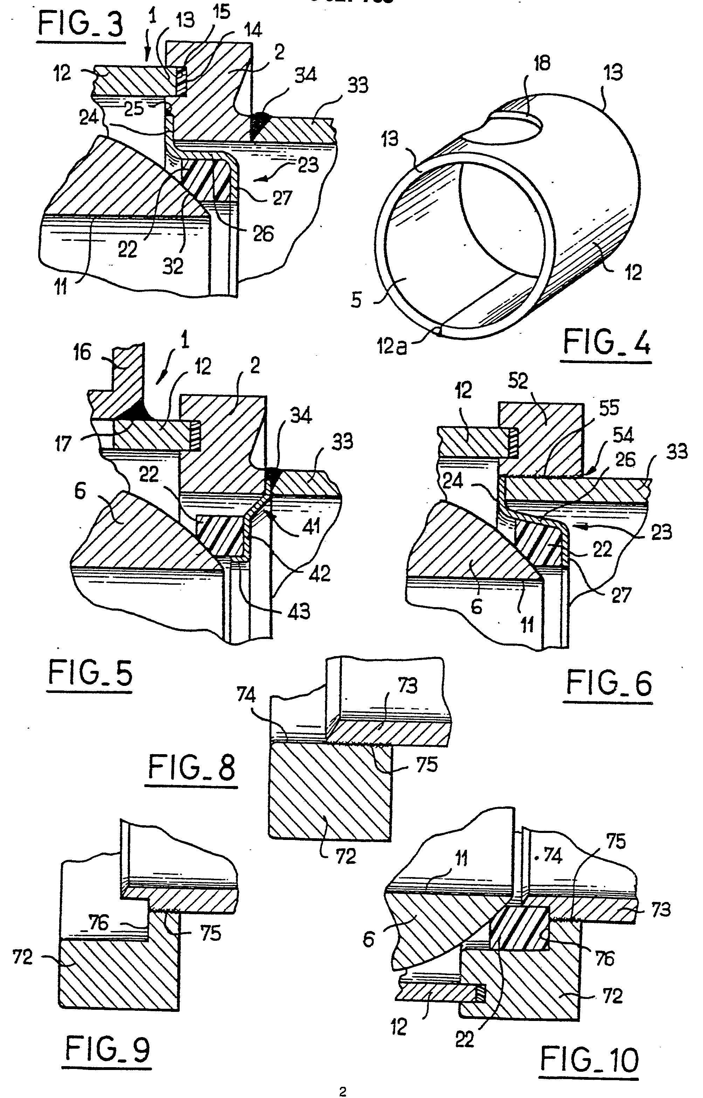

Selon une particularité de l'invention, le tronçon tubulaire 12 est scié à la longueur voulue dans un tube extrudé. Selon une variante (Figure 4), il est réalisé à partir d'une pièce de tôle rectangulaire, initialement plane, puis rendue cylindrique par roulage, et dont les deux bords ainsi amenés en regard l'un de l'autre sont reliés par un cordon de soudure 12a.

La boule 6 est supportée entre deux sièges annulaires 22 montés chacun à l'une des extrémités du passage 5, de façon à entourer les extrémités du conduit 11 en position d'ouverture du robinet.

Chacun des sièges 22, par exemple en polytétrafluoréthylène ou autre résine polyfluorée, est porté par le flasque 2 adjacent par l'intermédiaire d'une membrane annulaire 23 contre laquelle il est collé, ou simplement serré par la boule 6. La bordure externe 24 de la membrane 23 est fixée à la face du flasque 2 tournée vers l'autre flasque 2 par un cordon de soudure 25 (Figure 3).

Chaque membrane 23 présente un profil sensiblement en Z qui comporte au-delà de la bordure externe 24, sensiblement radiale, une aile sensiblement cylindrique 26 dirigée à l'opposé de la boule 6 et suivie d'une bordure interne 27 dirigée à peu près radialement vers l'axe XX. Le profil ainsi adopté confère une certaine élasticité à l'aile 26 lui permettant de travailler en flexion relativement à la bordure 24.

Chaque siège 22 présente un profil complémentaire de celui de l'aile 26 et de la bordure 27 permettant son emboîtement dans celle-ci, et, du côté extérieur, une surface d'appui sphérique 32 pour la boule 6 (Figure 3).

Chaque flasque 2 porte un embout tubulaire 33 dirigé à l'opposé de la boule 6 pour permettre le raccordement du robinet à la canalisation (non représentée). Les embouts 33 sont fixés par des cordons de soudure annulaires 34 contre la face des flasques 2 opposée à celle qui porte déjà le cordon 25.

, Le robinet décrit ci-dessus est particulièrement léger grâce à son corps à paroi mince, et d'une réalisation particulièrement économique, si l'on compare la simplicité du tronçon 12 aux corps des robinets connus.

Ce mode de réalisation nécessite cependant deux cordons de soudure 25 et 34 pour chaque flasque 2.

Pour remédier à cet inconvénient, dans le mode de réalisation représenté à la Figure 5, la bordure extérieure de la membrane 41 est interposée entre l'embout 33 et le flasque 2, de sorte que le cordon de soudure 34 assure simultanément la fixation de l'embout 33 et de la membrane 41.

La membrane 41 comprend une aile cambrée 42 dirigée vers l'axe XX' à partir de sa bordure extérieure précitée, et un rebord cylindrique 43. Le siège 22 est emboîté sur la bague à collerette ainsi formée par l'aile 42 et le rebord 43.

La fabrication de ce robinet est plus simple que celle du robinet représenté aux Figures 1 à 4. Le cordon de soudure 34 est cependant assez délicat à réaliser, notamment en ce qui concerne le maintien des pièces avant le soudage et risque d'être fragile à l'utilisation.

Dans la variante de réalisation représentée à la Figure 6, qui tend à remédier à cette sujétion, le flasque 52 est similaire au flasque 2, si ce n'est son ouverture centrale 54 qui est de diamètre agrandi pour permettre d'y emboîter l'embout 33 et la membrane 23 (similaire à celle décrite en référence aux Figures 1 à 4), dont le diamètre externe est le même que celui de l'embout 33.

La membrane 23 et l'embout 33, emboîtés l'un contre l'autre dans l'ouverture 54, sont reliés au flasque 52 par un cordon de soudure cylindrique 55 commun réalisé par bombardement électronique suivant la surface de l'ouverture 54.

Grâce à l'emboîtement préalable des pièces, qui facilite leur positionnement avant soudage, et au soudage par bombardement électronique qui s'effectue dans la masse métallique et sans oxydation, ce mode de réalisation et son procédé de fabrication assurent une fixation très solide de la membrane 23 et de l'embout 33 avec un seul cordon de soudure.

Dans le mode d'exécution représenté à la Figure 7, on utilise au contraire des flasques 62 dont l'ouverture 64 est de diamètre réduit par rapport aux flasques 2.

Le siège 22 est emboîté dans une gorge annulaire créée entre la surface de l'ouverture 64 du flasque 62 et une membrane rapportée 65 à profil en Z fixée contre ce flasque et dont l'aile centrale 63 fait saillie vers l'axe XX. Les embouts 33 sont fixés contre une collerette 67 des flasques 62 dirigée à l'opposé de la boule 5 par un cordon de soudure annulaire 68. Ce dernier fixe également l'aile externe 69 de la membrane 65 au flasque 62.

Comme le montrent les Figures 8 à 10, il n'est pas indispensable de prévoir une membrane pour maintenir le siège.

Selon le procédé de fabrication propre à cette réalisation, on commence par emmancher (Figure 8) l'embout 73, de diamètre plus faible que l'embout 33, jusqu'au milieu environ de l'ouverture 74, de diamètre également réduit, ménagée dans le flasque 72, et on soude cet embout 73 au flasque 72 par un cordon de soudure 75 cylindrique réalisé par bombardement électronique suivant la surface périphérique de l'ouverture 74. On usine ensuite (Figure 9) un évidement annulaire 76 autour de l'ouverture 74, de façon que cet usinage concerne à la fois le flasque 72, l'extrémité de l'embout 73, ainsi que le cordon de soudure 75.

L'évidement 76 est ainsi séparé du passage réservé à l'écoulement par l'extrémité amincie de l'embout 73.

Le siège 22 est alors installé dans cet évidement et porte par trois faces adjacentes respectivement contre les deux faces cylindriques et le fond plan de l'évidement 76 (Figure 10).

Le robinet ainsi constitué comporte une boule 6 dont le conduit 11 a le même diamètre que les embouts 73, de sorte que la perte de charge en position d'ouverture totale est particulièrement réduite.

Tous ces exemples de réalisation peuvent satisfaire à diverses utilisations du robinet ou à diverses conditions de fabrication, ou encore procurer un appui plus ou moins élastique des sièges selon la nature de ces derniers, mais d'une façon générale, l'invention permet de réaliser un robinet particulièrement léger et économique en reportant sur les flasques, nécessairement massifs, toutes les fonctions mécaniques d'étanchéité, ce qui permet l'utilisation d'un corps particulièrement simple.

Bien entendu, l'invention n'est pas limitée aux exemples décrits, et de nombreux aménagements peuvent être apportés à ces exemples sans sortir de son cadre.

C'est ainsi que les sièges pourraient être portés par une collerette radiale des flasques, sans utiliser de membrane ni faire participer les embouts au maintien de ces sièges.

## Revendications

1. Robinet à boule comprenant un corps tubulaire (1) ayant des extrémités annulaires, deux flasques (2, 52, 62, 72) présentant chacun une ouverture centrale (4, 54, 64, 74) entourée par une gorge annulaire (14), des moyens pour solliciter les flasques (2, 52, 62, 72) l'un vers l'autre tandis que les extrémités annulaires du corps (1) sont engagées chacune dans la gorge (14) de l'un des flasques, un obturateur sphérique (6) traversé par un passage (11), un arbre de commande (7) monté en rotation dans un alésage (18) du corps (1) et lié en rotation à l'obturateur sphérique (6), et deux sièges annulaires (22) montés de chaque côté de l'obturateur sphérique (6), caractérisé en ce que chaque siège (22) est positionné indépendamment du corps (1), par des moyens (23, 41, 65, 73) fixés au pourtour de l'ouverture centrale (4, 54, 64, 74) du flasque adjacent (2, 52, 62, 72).

2. Robinet conforme à la revendication 1, caractérisé en ce que chaque siège (22) est porté par une membrane annulaire (23, 41, 65) dont la bordure externe est assujettie au flasque respectif (2, 52, 62).

3. Robinet conforme à la revendication 2, caractérisé en ce que chaque flasque (2, 52, 62) porte un embout tubulaire (33) dirigé à l'opposé de la boule (6), et en ce que l'embout (33) et la membrane (23, 41, 65) sont assujettis au flasque (2, 51, 62) par un cordon de soudure commun (34, 55, 68).

4. Robinet conforme à la revendication 3, caractérisé en ce que le flasque (2) est soudé contre l'extrémité annulaire de l'embout (33), avec interposition de la partie périphérique de la membrane (41).

5. Robinet conforme à la revendication 3, caractérisé en ce que le diamètre du tronçon tubulaire (12) est supérieur à celui de l'embout (33), et en ce que l'embout (33) est emmanché dans l'ouverture centrale (54) du flasque (52).

6. Robinet conforme à la revendication 1, caractérisé en ce que chaque siège (22) est monté dans un évidement annulaire (76) ménagé autour de l'ouverture centrale (64, 74) de chaque flasque (62, 72).

7. Procédé de fabrication d'un robinet à boule conforme à la revendication 2, caractérisé en ce qu'on emboîte l'un contre l'autre une membrane (23) et un embout tubulaire de raccordement (33) dans l'ouverture centrale (54) de chaque flasque (52), et en ce qu'on réalise par bombardement électronique un cordon de soudure cylindrique (55) sur le pourtour de cette ouverture (54) pour fixer simultanément l'embout (33) et la membrane (23) au flasque (52).

8. Procédé de fabrication d'un robinet à boule conforme à la revendication 6, caractérisé en ce qu'on emmanche un embout tubulaire de raccordement (73) dans chacun des flasques (72), en ce qu'on soude cet embout (73) au flasque (72) par bombardement électronique, et en ce qu'autour de l'ouverture centrale (74) du flasque (72), on usine pour le siège un évidement annulaire (76) séparé du passage réservé à l'écoulement par l'extrémité annulaire de l'embout (73).

## Claims

1. Ball-cock comprising a tubular body (1) having annular ends, two flanges (2, 52, 62, 72) each provided with a central opening (4, 54, 64, 74) surrounded by an annular groove (14), means for urging the flanges (2, 52, 62, 72) towards each other whilst the annular ends of the body (1) are each seated in the groove (14) of one of the flanges, a spherical obturator (6) with a passage (11) therethrough, a control shaft (7) rotatably mounted in a bore (18) of the body (1) and rotatably connected to the spherical obturator (6), and two annular seats (22) mounted on either side of the spherical obturator (6), characterized in that each seat (22) is positioned independently of the body (1), by means (23, 41, 65, 73) secured to the periphery of the central opening (4, 54, 64, 74) of the adjacent flange (2, 52, 62, 72).

2. Ball-cock in accordance with claim 1, characterized in that each seat (22) is borne by an annular diaphragm (23, 41, 65) whose outer edge is secured to the respective flange (2, 52, 62).

3. Ball-cock in accordance with claim 2, characterized in that each flange (2, 52, 62) bears a tubular end-piece (33) directed away from the ball (6), and in that the end-piece (33) and the diaphragm (23, 41, 65) are secured to the flange (2, 51, 61) by a common weld bead (34, 55, 68).

4. Ball-cock in accordance with claim 3, characterized in that the flange (2) is welded against the annular end of the end-piece (33), with interposition of the peripheral portion of the diaphragm (41).

5. Ball-cock in accordance with claim 3, characterized in that the diameter of the tubular section (12) is greater than that of the end-piece (33), and in that the end-piece (33) is ensleeved in the central opening (54) of the flange (52).

6. Ball-cock in accordance with claim 1, characterized in that each seat (22) is mounted in an annular recess (76) formed around the central opening (64, 74) of each flange (62, 72).

7. Method of manufacturing a ball-cock as claimed in claim 2, characterized in that a diaphragm (23) and a tubular coupling end-piece (33) are fitted against each other in the central opening (54) of each flange (52), and in that a cylindrical weld bead (55) is formed by electron bombardment around the periphery of said opening (54) to fix the end-piece (33) and the diaphragm (23) to the flange (52) simultaneously.

8. Method of manufacturing a ball-cock as claimed in claim 6, characterized in that a tubular coupling end-piece (73) is ensleeved in each of the flanges (72), in that said end-piece (73) is welded to the flange (72) by electron bombardment, and in that an annular recess (76) separate by the annular end of the end-piece (73) from the passage intended for fluid-flow is machined for the seat around the central opening (74) of the flange (72).

## Ansprüche

1. Kugelhahn mit einem rohrförmigen Körper (1), der ringförmige Enden aufweist, zwei Flanschen (2, 52, 62, 72), die jeweils eine mittige Öffnung (4, 54, 64, 74) aufweisen, welche von einer Ringnut (14) umgeben ist, Mitteln zum Andrücken der Flansche (2, 52, 62, 72) gegeneinander, während die ringförmigen Enden des Körpers (1) jeweils in die Nut (14) eines der Flansche eingesetzt sind, einem kugelförmigen Verschlußglied (6), das von einem Kanal (11) durchquert ist, einer drehbar in einer Bohrung (18) des Gehäuses (1) gelagerten Steuerwelle (7), die drehfest mit dem kugelförmigen Verschlußglied (6) verbunden ist, und zwei Ringsitzen (22), die auf jeder Seite des kugelförmigen Verschlußgliedes (6) angeordnet sind, dadurch gekennzeichnet, daß jeder Sitz (22) unabhängig von dem Körper (1) durch Mittel (23, 41, 65, 73) positioniert ist, die am Umfang der mittigen Öffnung (4, 54, 64, 74) des angrenzenden Flansches (2, 52, 62, 72) befestigt sind.

2. Hahn nach Anspruch 1, dadurch gekennzeichnet, daß jeder Sitz (22) von einer Ringmembran (23, 41, 65) getragen ist, deren Außenrand an dem entsprechenden Flansch (2, 52, 62) angesetzt ist.

3. Hahn nach Anspruch 2, dadurch gekennzeichnet, daß jeder Flansch (2, 52, 62) einen rohrförmigen Stutzen (33) trägt, der von der Kugel (6) fortgerichtet ist, und daß der Stutzen (33) und die Membran (23, 41, 65) mit dem Flansch (2, 51, 62) durch eine gemeinsame Schweißnaht (34, 55, 68) verbunden sind.

4. Hahn nach Anspruch 3, dadurch gekennzeichnet, daß der Flansch (2) gegen das ringförmige Ende des Stutzens (33) unter Zwischenfügung des Umfangsteils der Membran (41) angeschweißt ist,

5. Hahn nach Anspruch 3, dadurch gekennzeichnet, daß der Durchmesser des Rohrabschnitts (12) größer ist als derjenige des Stutzens (33) und daß der Stutzen (33) in die mittige Öffnung (54) des Flansches (52) eingeschoben ist.

6. Hahn nach Anspruch 1, dadurch gekennzeichnet, daß jeder Sitz (22) in einer ringförmigen Aussparung (76) montiert ist, die um die mittige Öffnung (64, 74) jedes Flansches (62, 72) herum angebracht ist.

7. Verfahren zur Herstellung eines Kugelhahns nach Anspruch 2, dadurch gekennzeichnet, daß eine Membran (23) und ein rohrförmiger Anschlußstutzen (33) in die mittige Öffnung (54) jedes Flansches (52) gegeneinander eingeschoben werden und daß durch Elektronenbeschuß eine zylindrische Schweißnaht (55) längs des Umfangs dieser Öffnung (54) hergestellt wird, um gleichzeitig den Stutzen (33) und die Membran (23) an dem Flansch (52) zu befestigen.

8. Verfahren zur Herstellung eines Kugelhahns nach Anspruch 6, dadurch gekennzeichnet, daß ein rohrförmiger Anschlußstutzen (73) in jeden Flansch (72) eingeschoben wird, daß dieser Stutzen (73) an den Flansch (72) durch Elektronenbeschuß angeschweißt wird und daß um die mittige Öffnung (74) des Flansches (72) herum für den Sitz eine ringförmige Aussparung (76) ausgearbeitet wird, die von dem Strömungskanal durch das ringförmige Ende des Stutzens (73) getrennt ist.

FIG_1

FIG_2

FIG_7

0 027 765

FIG_3

FIG_4

FIG_5

FIG_6

FIG_8

FIG_9

FIG_10

2